# EUROPÄISCHE PATENTSCHRIFT

(11) **EP 0 485 724 B1**
(45) Veröffentlichungstag und Bekanntmachung des Hinweises auf die Patenterteilung: **15.06.1994**
(21) Anmeldenummer: 91116613.0
(22) Anmeldetag: 28.09.1991
(51) Int. Cl.: B62D 33/06

(54) **Kippvorrichtung für Fahrerhäuser an Lastkraftwagen**
Tilting device for driver's cab for lorries
Dispositif de basculement pour cabines du routier pour camions

(30) Priorität: 16.11.1990 DE 4036554
(43) Veröffentlichungstag der Anmeldung: 20.05.1992
(73) Patentinhaber: MAN Nutzfahrzeuge Aktiengesellschaft, 80976 München (DE)
(72) Erfinder: Albertshofer, Günter, Dipl.-Ing. (FH), W-8000 München 70 (DE)

(56) Entgegenhaltungen:
- DE-C- 2 203 452
- GB-A- 2 080 742

## Beschreibung

Die Erfindung bezieht sich auf eine Kippvorrichtung für Fahrerhäuser von Lastkraftwagen mit einem einerseits am Fahrgestell und andererseits am Fahrerhaus angelenkten fluidischen Kolbenantrieb und einer zwischen Fahrerhaus und Kolbenantrieb angeordenten, in Kippstellung des Fahrerhauses wirksamen Klinkenverrasterung.

Eine Kippvorrichtung für Lkw-Fahrerhäuser ist nach der DE-C-22 03 452 bekannt. Die Kippvorrichtung weist ein Rastelement auf, dessen Längsachse größer ist als die Breitachse und das mittels eines Bolzens fest am Fahrerhaus angebracht ist. Das Rastelement ist in einem am Kolben des Kolbenantriebes befindlichen Langloch geführt, so daß die vertikalen Federbewegungen des Fahrerhauses unbehindert ausgeführt werden können. Beim Kippen des Fahrerhauses wird das Rastelement in der Kulisse des Langlochteiles derart verschwenkt, daß das Fahrerhaus beim Überschreiten des Kippunktes keine Fallbewegung mehr nach vorne ausführen kann. Bei der Bewegung des Rastelementes im Langloch entsteht bei fahrbereitem Fahrerhaus Reibung aufgrund der Relativbewegung zwischen den Metallteilen, wie auch beim Kippen durch die kombinierte dreh- und translatorische Bewegung des Rastelementes in der Kulisse starke Reibungskräfte auftreten. Solcherart wird ein Biegemoment in die Kolbenstange des Kippzylinders eingeleitet, was zu Undichtigkeiten des Kippzylinders führen kann und somit dessen Lebendauer sehr begrenzt.

Der Erfindung liegt die Aufgabe zugrunde, die gattungsgemäße Kippvorrichtung hinsichtlich ihrer Lebensdauer zu verbessern.

Dies wird erfindungsgemäß durch die kennzeichnenden Merkmale des Anspruches 1 erreicht. Solcherart ergibt sich ein großer Vorteil gegenüber der bekannten gattungsgemäßen Vorrichtung, indem die Rollen sowohl in Gebrauchsstellung des Fahrerhauses als auch bei heruntergekipptem Fahrerhaus eine reine Rollbewegung im Langloch des Kolbenantriebes ausführen, wie auch beim Kippen, wenn die Rollen in der Kulisse des Langloches im Rastenaufnahmeelement abrollen. Dadurch wird verhindert, daß einerseits die Metallteile sich zu stark abnutzen und andererseits ein Biegemoment in die Kolbenstange eingeleitet wird.

Die Erfindung ist in einem Ausführungsbeispiel dargestellt.

Es zeigen:
- Fig. 1: das Vorderteil eines Lastkraftwagens mit Fahrerhaus und Kippvorrichtung,
- Fig. 2: einen Ausschnitt der Kippvorrichtung bei betriebsbereitem Fahrerhaus,
- Fig. 3 und Fig. 4: Zwischenstellungen der Kippvorrichtung,
- Fig. 5: Kippvorrichtung bei gekipptem Fahrerhaus.

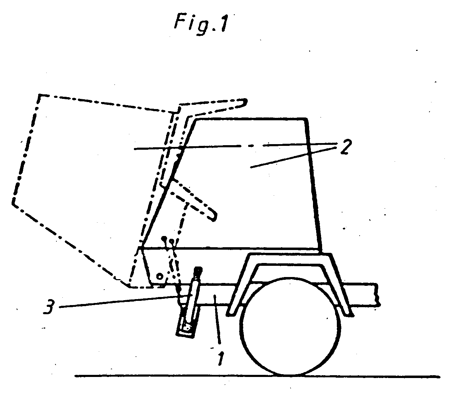

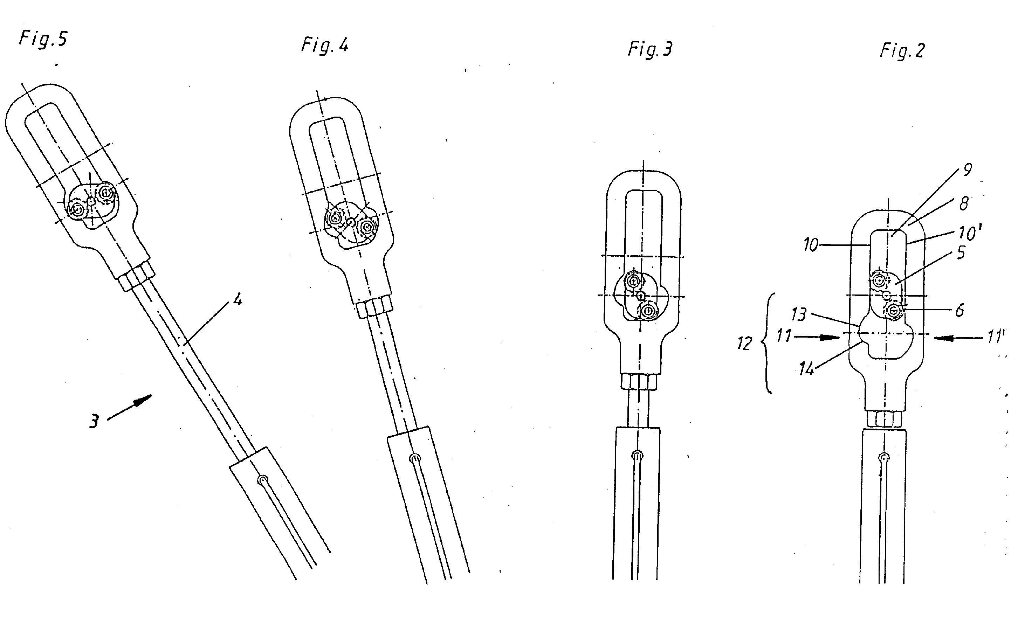

Fig. 1 zeigt den vorderen Teil eines Lkw's mit einem Fahrgestell 1 und einem darauf angebrachten Fahrerhaus 2, das in seiner fahrbereiten und in seiner gekippten Stellung gezeigt ist. Den Figuren 2 - 5 sind die Einzelelemente der Kippvorrichtung wie auch die End- und Zwischenpositionen zu entnehmen. Am Kolben 4 des fluidischen Kolbenantriebs 3 ist ein Rastenaufnahmeelement 8 fest angeordnet. Das Rastenaufnahmeelement 8 weist ein Langloch 9 mit im unteren Bereich an den Langlochlängsseiten 10 und 10′ angeordneten Rasten 11 und 11′ auf, die versetzt zueinander stehen, angeordnet sind. Die Rasten 11 und 11′ weisen eine Rastenkurve 12 auf, die sich aus den einzelnen Kurvenabschnitten 13 und 14 zusammensetzt. Die Rasten 11 und 11′ sind in 180° Umkehrung gespiegelt angeordnet. Am Fahrerhaus ist in dessen unteren Bereich ein Rastelement 5 drehfest angebracht. Das Rastelement hat eine Längsachse, die größer ist als seine Querachse. Am Rastelement 5 sind mit Abstand zur Längs- und zur Querachse, sich diametral gegenüberliegende Rollen 6 angeordnet, deren Umfang die Kontur des Rastelementes 5 übergreift und die an den Langloch-Längsseiten 10, 10′ anliegen. Nach Fig. 2 kann das Fahrerhaus nach unten wie auch nach oben durchfedern, indem die Rollen 6 an den Langlochlängsseiten 10 und 10′ abrollen. Zum Abkippen des Fahrerhauses wird das Fahrerhaus über den fluidischen Kolbentrieb 3 abgedrückt. Fig. 3 zeigt die Endstellung der translatorischen Bewegung des Kolbenantriebes. Fig. 4 zeigt die erste Phase der Schwenkbewegung, wobei die Rollen 6 in den ersten Abschnitt 13 der Rastenkurve 12 eingleiten. Aus Fig. 5 ist die Endstellung des fluidischen Kurbelantriebes und somit auch des abgekippten Fahrerhauses zu entnehmen. In dieser Endstellung kommen die Rollen 6 des Rastelementes 5 im zweiten Abschnitt 14 in der Rastenkurve 12 zur Anlage. Die Rastenkurve 12 setzt sich aus einem ersten Abschnitt 13 und einem zweiten Abschnitt 14 zusammen, die tangential ineinander übergehen. Der erste Abschnitt 13 wird durch den Radius erzeugt, der sich vom Mittelpunkt des Rastelementes 5 bis zum Umfang der Rolle 6 erstreckt. Der zweite Rastenabschnitt 14 wird durch den Radius der Rolle 6 erzeugt.

### Bezugszeichenliste

- 1: Fahrgestell
- 2: Fahrerhaus
- 3: fluidischer Kolbenantrieb
- 4: Kolben
- 5: Rastelement
- 6: Rollen
- 7: -
- 8: Rastenaufnahmeelement
- 9: Langloch in 8
- 10, 10′: Langlochlängsseiten
- 11, 11′: Rasten
- 12: Rastenkurve
- 13: erster Abschnitt von 12
- 14: zweiter Abschnitt von 12

## Patentansprüche

1. Kippvorrichtung für Fahrerhäuser von Lastkraftwagen, mit einem einerseits am Fahrgestell und andererseits am Fahrerhaus angelenkten fluidischen Kolbenantrieb und einer zwischen Fahrerhaus und Kolbenantrieb angeordneten, in Kippstellung des Fahrerhauses wirksamen Klinkenverrasterung, dadurch gekennzeichnet, daß
- am Fahrerhaus (2) ein ortfestes Rastelement (5) mit an ihm im Abstand zueinander und auf einer im spitzen Winkel zur Rastelement-Längsträgerachse befindlichen Achse angeordnete drehbare Rollen (6) vorgesehen ist, und
- am Kolben (4) des Kolbentriebes (3) ein Rastenaufnahmeelement (8) mit einem Langloch (9) angeordnet ist, das in seinem unteren Bereich, auf beiden Langlochseiten (10, 10′) in der Tiefenerstreckung versetzt angeordnete kurvenförmige Rasten (11, 11′) aufweist und die Rastenkurve (12) in einem ersten Abschnitt (13) durch den vom Mittelpunkt des Rastelementes (5) bis zum Umfang der Rolle (6) sich erstreckenden Radius und in einem sich daran anschließenden zweiten Abschnitt (14) durch den Rollenradius erzeugt wird,
- wobei bei betriebsbereitem Fahrerhaus (2) die Rollen (6), symmetrisch versetzt zur Langlochlängsachse, an den Langloch-Längsseiten (10, 10′) abrollbar anliegen, oder bei abgekipptem Fahrerhaus (2) die Rollen (6) über eine kombinierte translatorische Bewegung und Drehbewegung des Kolbenantriebes (3) zur Anlage in den Rasten (11,11′) kommen.

## Claims

1. A tilting device for drivers' cabs of lorries, with a fluid piston drive hinged to the undercarriage on one side and to the driver's cab on the other, and with a latch-type catch arranged between the driver's cab and the piston drive and effective in the tilted position of the driver's cab, **characterised in that**
- the driver's cab (2) is provided with a stationary catch member (5) with rotatable rollers (6) arranged thereon at a distance from one another and on an axle located at an acute angle to the longitudinal carrier axle of the catch member, and
- the piston (4) of the piston drive (3) is provided with a catch receiving member (8) with an oblong hole (9) having curved notches (11, 11′) on both sides (10, 10′) in the lower region thereof, these notches being arranged offset in the vertical direction, and the curve of the notch (12) being generated in a first portion (13) by the radius extending from the central point of the catch element (5) to the periphery of the roller (6) and in an adjacent second portion (14) by the radius of the roller,
- wherein, when the driver's cab (2) is in the operating position, the rollers (6), offset symmetrically to the longitudinal axis of the oblong hole, roll on the longitudinal sides (10, 10′) of the oblong hole or, when the driver's cab (2) is tilted, the rollers (6) come to rest in the notches (11, 11′) via a combined translatory movement and rotary movement of the piston drive (3).

## Revendications

1. Dispositif de basculement pour cabine de conducteur de camion, avec un mécanisme d'entraînement à piston, actionné par un fluide, articulé d'une part sur le châssis du véhicule et d'autre part sur la cabine du conducteur et avec un dispositif d'accrochage à cliquet disposé entre la cabine du conducteur et le mécanisme d'entraînement à piston, qui agit quand la cabine du conducteur est en position basculée, dispositif de basculement caractérisé en ce que :
- sur la cabine du conducteur (2), on prévoit un élément d'encliquetage à piston fixe (5) avec des galets (6), pouvant tourner, disposés sur lui à une certaine distance les uns des autres et sur un axe qui forme un angle aigu par rapport à l'axe de support longitudinal de l'élément d'encliquetage et
- sur le piston (4) du mécanisme d'entraînement à piston (3) on dispose un élément de réception d'encliquetage (8) avec un trou oblong (9) qui présente dans sa zone inférieure des encoches (11, 11′) en forme de courbes, disposées de façon décalée sur les deux côtés du trou oblong (10, 10′) en ce qui concerne leur étendue la plus profonde et en ce qu'on réalise la courbe d'encliquetage (12) dans une première section (13) avec un rayon qui s'étend du centre de l'élément d'encliquetage (5) jusqu'au pourtour du galet (6) et dans une seconde section (14) se raccordant à la précédente avec le rayon du galet,
- les galets (6), quand la cabine du conducteur (2) est en position de marche, reposant de façon à pouvoir rouler sur les côtés longitudinaux (10, 10') du trou oblong, en étant décalés symétriquement par rapport à l'axe longitudinal du trou oblong, ou quand la cabine du conducteur est en position basculée, les galets (6) venant en appui dans les encoches (11, 11′) au moyen d'un mouvement combiné de translation et d'un mouvement de rotation du mécanisme d'entraînement à piston (3).
